# EUROPEAN PATENT APPLICATION

(11) **EP 4 494 926 A1**
(43) Date of publication of application: **22.01.2025**
(21) Application number: 23769804.8
(22) Date of filing: 14.03.2023
(51) Int. Cl.: B60L 53/80, B60S 5/06

(54) **BATTERY SWAPPING STATION**

(30) Priority: 18.03.2022 CN 202220605666 U
(71) Applicant: Contemporary Amperex Technology Co., Limited, Ningde, Fujian 352100 (CN)
(72) Inventor: CHEN, Disong, Xiamen, Fujian 361001 (CN); WU, Yuanhe, Xiamen, Fujian 361001 (CN); YE, Qingfeng, Xiamen, Fujian 361001 (CN); CHEN, Can, Xiamen, Fujian 361001 (CN); SHUAI, Ling, Xiamen, Fujian 361001 (CN); WANG, Qingming, Xiamen, Fujian 361001 (CN); QUE, Shibiao, Xiamen, Fujian 361001 (CN)
(74) Representative: Gong, Jinping
(86) International application number: PCT/CN2023/081432
(87) International publication number: WO 2023/174302

(57) **Abstract**

A battery swapping station (100), the battery swapping station (100) comprising: a body (200), wherein the body (200) is internally provided with a battery storage area (10) and a turnover channel (20), the battery storage area (10) and the turnover channel (20) both extend in a first direction, and the battery storage area (10) and the turnover channel (20) are arranged side by side in a second direction. The battery storage area (10) comprises an adjustment position (11) and a plurality of storage positions (121), wherein the plurality of storage positions (121) are sequentially distributed in a first direction and are used for storing batteries; and the adjustment position (11) is located on one side of the plurality of storage positions (121) in the first direction. The turnover channel (20) is used for transferring the batteries at the storage positions (121). The first direction and the second direction are perpendicular to each other. The adjustment position (11) and the turnover channel (20) together form a battery adjustment area (30). A wall surface of the body (200) in the first direction is provided with a battery access opening (40), and the battery access opening (40) communicates with the battery adjustment area (30).

## Description

### Cross-Reference to Related Applications

The present application claims the priority to Chinese patent application 202220605666.X, filed on March 18, 2022 and entitled "BATTERY SWAPPING STATION", the contents of which are incorporated herein in their entirety by reference.

### Technical Field

The present application relates to the field of battery swapping technology, and specifically, to a battery swapping station.

### Background Art

Energy conservation and emission reduction are the key to sustainable development of the automotive industry. Electric vehicles have become an important part of the sustainable development of the automotive industry due to their advantages in energy conservation and environmental protection. With the popularity of electric vehicles, in order to ensure that the power loss of electric vehicles can be replenished in time during driving, battery swapping stations have emerged. For the electric vehicles, the battery swapping technology is an important factor related to their development.

In the development of the battery swapping technology, how to improve the battery swapping efficiency of the battery swapping station is an urgent technical problem that needs to be solved in battery swapping technology.

### Summary

The present application provides a battery swapping station, which has relatively high battery swapping efficiency.

The present application is realized through the following technical solutions.

In a first aspect, the present application provides a battery swapping station, including: a main body provided therein with a battery storage region and a transit channel. Both the battery storage region and the transit channel extend in a first direction. The battery storage region and the transit channel are arranged side by side in a second direction. The battery storage region includes an adjustment location and a plurality of storage locations, the plurality of storage locations are sequentially distributed in the first direction, and are used to store batteries, and the adjustment location is located at one side of the storage locations in the first direction. The transit channel is used for allowing transferring of the batteries on the storage locations, and the first direction and the second direction are perpendicular to each other, where the adjustment location and the transit channel together form a battery adjustment region, a battery inlet/outlet port is formed at a wall surface of the main body in the first direction, and the battery inlet/outlet port communicates with the battery adjustment region.

Compared with the solution that the battery enters and leaves the station directly from the transit channel and the electric device needs to be parked within a fixed range for battery swapping, the technical solution of the embodiment of the present application enables, through the battery adjustment region, the battery to be correspondingly adjusted in posture in this region according to the position where the electric device outside the station is located, without need of the driver adjusting the parking position of the electric device, reducing the operation difficulty of the driver and further improving the battery swapping efficiency.

In some embodiments, the battery storage region includes a first battery storage region and a second battery storage region, the transit channel is located between the first battery storage region and the second battery storage region, and the transit channel and the adjustment location of the first battery storage region and/or the adjustment location of the second battery storage region together form the battery adjustment region.

According to the technical solution of the embodiment of the present application, the battery storage region includes a first battery storage region and a second battery storage region, which are located at two sides of the transit channel. When the battery adjustment region is formed by the transit channel and the adjustment location of the first battery storage region, or by the transit channel and the adjustment location of the second battery storage region, a large space can be provided for the battery to adjust its own posture. When the battery adjustment region is formed by the transit channel, the adjustment location of the first battery storage region and the adjustment location of the second battery storage region, a larger space can be provided for the battery to adjust its own posture.

In some embodiments, the internal space of the main body includes an upper space and a lower space, and the first battery storage region, the transit channel and the second battery storage region are provided in the upper space.

According to the technical solution of the embodiment of the present application, the first battery storage region, the transit channel and the second battery storage region are provided in the upper space, and various functional equipment (such as a control room or charging device, etc.) may be provided in the lower space, so that the battery is separated from the functional equipment, to avoid the functional equipment interfering with the transferring of the battery.

In some embodiments, the main body includes a first box body, a second box body and a partition, the first box body and the second box body define an internal space of the main body, and the partition is connected to the first box body and/or the second box body, so as to divide the internal space into the upper space and the lower space.

According to the technical solution of the embodiment of the present application, the first box body and the second box body may be containers each having an opening, respectively, that is, the main body is made of two containers, and the two containers have the openings opposite to each other and are stacked up and down to define the internal space of the main body. Then the partition is provided in the internal space to divide it into the upper space and the lower space. The main body may be manufactured in advance, which facilitates the overall transportation to the destination and meets the needs of rapid landing and assembly. It does not require on-site construction, is not affected by weather, and reduces manpower intensity.

In some embodiments, the main body is further provided therein with a third battery storage region, where the third battery storage region is disposed in the lower space and communicates with the battery adjustment region.

In the case that the size of the battery swapping station remains unchanged, the number of batteries stored therein is limited. Since batteries are not stored in the battery adjustment region, the number of batteries stored in the battery swapping station will be reduced accordingly compared to the existing solution. To solve this problem, the third battery storage region is provided below the battery adjustment region, to make up for the number of the stored batteries decreased due to arrangement of the battery adjustment region, ensure the battery accommodation amount of the battery swapping station, and thereby improve the battery swapping efficiency of the battery swapping station.

In some embodiments, the battery swapping station further includes charging devices, which are disposed in the lower space and used to charge the battery.

In the technical solution of the embodiment of the present application, by providing the charging device, the depleted battery removed from the electric device is charged, for ready for next battery swapping.

In some embodiments, the battery swapping station further includes battery bases connected to the charging devices for connecting the batteries to charge the batteries; and the storage locations each include a charging location and a temporarily storage location, the battery bases are each provided in the corresponding charging location, and the temporarily storage location is used for allowing transferring of the battery.

According to the technical solution of the embodiment of the present application, due to the limited charging load of the battery swapping station and the maximum number of charged batteries, the depleted battery is first placed in the temporarily storage location, and after the fully charged battery in the charging location is transferred and installed on the electric device, the depleted battery is transferred to the battery base in the charging location for charging.

In some embodiments, the battery swapping station further includes a cooling device, which is disposed in the lower space and used to cool the battery.

By providing the cooling device in the lower space, the batteries in the battery swapping station are cooled to ensure the safety of the batteries in the battery swapping station, thereby ensuring the safety of the battery swapping station. At the same time, the cooling device is provided in the lower space, not interfering with the transferring of the battery.

In some embodiments, the main body is further provided therein with a control room, where the control room is disposed in the lower space.

By providing the control room in the lower space, the battery swapping operation of the battery swapping station is controlled, ensuring the battery swapping efficiency of the battery swapping station.

In some embodiments, the wall surface of the second box body is provided with heat dissipation parts configured for dissipating heat in the lower space.

By providing the heat dissipation parts on the wall surface of the second box body, the heat in the lower space can be effectively discharged, thereby ensuring the safety of the battery swapping station.

In some embodiments, the battery swapping station further includes a side sealing part; the first box body extends beyond the second box body in the first direction; and the end, in the first direction, of the portion of the first box body extending beyond the second box body is connected with the side sealing part. The side sealing part, the first box body and the second box body together define a battery swapping channel, The battery swapping channel communicates with the battery inlet/outlet port.

By providing the side sealing part to support the suspended portion of the first box body and form the battery swapping channel for allowing parking of the electric device, the electric device can be parked in the battery swapping channel and subjected to battery swapping.

In some embodiments, the battery swapping station further includes a battery replacement device provided in the main body and used to transfer the battery.

According to the technical solution of the embodiment of the present application, the battery is transferred through the battery replacement device to realize the battery swapping operation of the battery swapping station. The battery replacement device can transfer the depleted battery of the electric device through the battery inlet/outlet port to the battery storage region in the main body, and can transfer the fully charged battery in the battery storage region through the battery inlet/outlet port to the electric device to realize battery swapping.

In some embodiments, the battery replacement device has a first moving mechanism, a second moving mechanism and a hoisting mechanism, where the first moving mechanism is used to drive the hoisting mechanism to move in a first direction, and the second moving mechanism is used to drive the hoisting mechanism to move in the second direction, and the hoisting mechanism is used to hoist the battery.

By providing the first moving mechanism and the second moving mechanism, the hoisting mechanism is enabled to move between the battery storage region and the transit channel and between the battery swapping station and the electric device, to realize transferring and battery swapping of the battery; and through the first moving mechanism and the second moving mechanism, the adjustment of the posture of the battery in the battery adjustment region in the first direction and the second direction.

In some embodiments, the hoisting mechanism includes a spreader unit and a battery grabbing unit. The spreader unit is used to drive the battery grabbing unit to move in a third direction. The battery grabbing unit is used to grab the battery, and the third direction, the first direction and the second direction are perpendicular to each other.

The battery grabbing unit realizes lifting and lowering by the spreader unit, and then realizes hoisting of the battery, so as to ensure the battery swapping efficiency of the battery swapping station.

In some embodiments, the hoisting mechanism further includes a rotation mechanism, for driving the battery grabbing unit to rotate around the third direction.

By providing the rotation mechanism, the angle of the battery around the third direction can be adjusted to adapt to the angle of the electric device relative to the battery swapping station, thereby achieving a larger swappable region (i.e. larger parking region) for the electric device and reducing the driver's parking accuracy requirements, and further improving the battery swapping efficiency.

In some embodiments, the battery swapping station further includes an identification unit used for identifying the position information of the battery.

By providing the identification unit, the position information of the depleted battery on the electric device can be identified, and is fed back to the battery replacement device, such that the battery grabbing unit performs posture adjustment in the first direction, the second direction and the third direction, to achieve the larger swappable region (i.e. larger parking region) for the electric device and reducing the driver's parking accuracy requirements, and further improving the battery swapping efficiency.

The above description is only an overview of the technical solutions of the present application. In order to have a clearer understanding of the technical means of the present application so that they can be implemented according to the content of the description, and in order to make the above and other purposes, features and advantages of the present application more obvious and understandable, the embodiments of the present application are specifically listed below.

### Brief Description of Drawings

In order to illustrate the technical solutions of the embodiments of the present application more clearly, the drawings required to be used in the embodiments will be briefly introduced below. It should be understood that the drawings below only show some embodiments of the present application and thus should not be construed as limiting the scope. Those of ordinary skill in the art may also obtain other drawings based on the drawings without paying creative efforts.
FIG. 1 is a perspective view of a battery swapping station in some embodiments of the present application;
FIG. 2 is an internal schematic diagram of a battery swapping station in some embodiments of the present application;
FIG. 3 is a side view of partial structure of a battery swapping station in some embodiments of the present application;
FIG. 4 is a perspective view of the internal structure of a battery swapping station in some embodiments of the present application;
FIG. 5 is a perspective view showing a vehicle and a battery swapping station in some embodiments of the present application;
FIG. 6 is a schematic view of a battery replacement device in some embodiments of the present application;
FIG. 7 is a schematic view showing a first moving mechanism and a second moving mechanism in some embodiments of the present application;
FIG. 8 is schematic view of a battery grabbing unit in some embodiments of the present application; and
FIG. 9 is a bottom view of a battery grabbing unit in some embodiments of the present application.

Reference signs: 100-battery swapping station; 200-main body; 200a-upper space; 200b-lower space; 201-first box body; 202-second box body; 203-partition; 10-battery storage region; 10a-first battery storage region; 10b-second battery storage region; 10c-third battery storage region; 11-adjustment location; 121-storage location; 20-transit channel; 30-battery adjustment region; 40-battery inlet/outlet port; 50-charging device; 51-battery base; 52-cooling device; 53-control room; 530-observation window; 54-heat dissipation part; 60-side sealing part; 61-battery swapping channel; 70-battery replacement device; 70a-overhead crane; 70b-overhead crane control module; 71-first moving mechanism; 72-second moving mechanism; 73-hoisting mechanism; 730-spreader unit; 731-battery grabbing unit; 732-rotation mechanism; 7320-control box; 7321-slewing bearing; 74-track; 75-identification unit; 76-spreader fixing device; 760-positioning pin; 761-steel cable movable pulley; 762-positioning pin sleeve; 77-battery locking mechanism; 770-first direction guide block; 771-second direction guide block; 772-lock tongue; 773-lock tongue driving cylinder; 774-in-position sensor.

### Detailed Description of Embodiments

Embodiments of the technical solution of the present application will be described in detail below with reference to the drawings. The following embodiments are only used to illustrate the technical solution of the present application more clearly, and are therefore only used as examples and cannot be used to limit the protection scope of the present application.

Unless otherwise defined, all technical and scientific terms used herein have the same meanings as commonly understood by those skilled in the technical field of the present application; the terms used herein are for the purpose of describing specific examples only and are not intended to limit the present application; and the terms "including" and "having" and any variations thereof in the description and claims of the present application and the above description of the drawings are intended to cover non-exclusive inclusion.

In the description of the embodiments of the present application, the technical terms "first", "second", etc. are only used to distinguish different objects, and cannot be understood as indicating or implying the importance in relativity or implicitly indicating the quantity, specific order or priority relationship of the indicated technical features. In the description of the embodiments of the present application, "multiple" refers to two or more than two, unless otherwise explicitly and specifically limited.

Reference made herein to "embodiment/example" means that a particular feature, structure, or characteristic described in connection with the embodiment may be included in at least one embodiment/example of the present application. The phases occurring in various places in the specification do not necessarily all refer to the same embodiment, nor are separate or alternative embodiments mutually exclusive of other embodiments. It is understood explicitly and implicitly by those skilled in the art that the embodiments described herein may be combined with other embodiments.

The term "and/or" in the description of embodiments of the present application indicates only an association relationship describing associated objects, meaning that there may be three kinds of relationships. For example, A and/or B may indicate three situations: there is only A, there are both A and B, and there is only B. In addition, the character "/" herein generally indicates that the associated objects therebefore and thereafter have an "or" relationship.

In the description of the embodiments of the present application, the term "plurality/multiple" means two or more (including two). Similarly, "a plurality of/multiple groups" means two or more groups (including two groups), and ""a plurality of/multiple pieces" means two or more pieces (including two pieces).

In the description of the embodiments of the present application, the orientation or positional relationships indicated by technical terms "center", "longitudinal", "horizontal", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on orientation or positional relationships shown in the drawings, only for the convenience of describing embodiments of the present application and simplifying the description, rather than indicating or implying that the device or element referred to must have a specific orientation, or be constructed and operated in a specific orientation, and therefore cannot be understood as a limitation on the present application.

In the description of embodiments of the present application, unless otherwise clearly specified and limited, technical terms such as "install", "link", "connect" and "fix" should be understood in a broad sense, for example, it may be a fixed connection, or a detachable connection, or an integral connection; it may be a mechanical connection, or may be electrical connection; it may be a direct connection, or an indirect connection through an intermediary, or it may be an internal communication between two elements or interaction relationship between two elements. Those of ordinary skill in the art may understand the specific meanings of the above terms in the embodiments of the present application according to specific situations.

With the development of new energy technology, the devices using batteries increases. When the electric device runs out of power, it is often connected to a charging device to replenish electric energy. For example, an electric vehicle may be connected to a charging pile for charging. Compared with the manner of being connected to a charging device such as charging pile to replenish electric energy, replacing the battery can replenish electric energy more quickly. Currently, there are also battery swapping stations specifically used for battery replacement. The battery swapping station includes a main body and a battery swapping channel. The main body has a battery storage region, a transit channel, overhead crane(s) and a hoisting mechanism. The battery swapping channel is used to allow vehicles to be parked, the battery storage region is used to store batteries, and the transit channel is adjacent to the battery storage region and is used to allow transferring of batteries in vehicles and battery storage region. The wall surface of the main body has a battery inlet/outlet port, and the battery inlet/outlet port connects the battery swapping channel and the transit channel. When needing to perform battery swapping, the vehicle is parked in a specified region in the battery swapping channel, and the overhead crane drives the hoisting mechanism to move. The hoisting mechanism removes the vehicle's depleted battery, enters the main body through the battery inlet/outlet port, and transfers it to the battery storage region through the transit channel, and then transfer the fully charged battery in the battery storage region through the transit channel and the battery inlet/outlet port to the vehicle to realize battery swapping.

The inventors found that in the existing battery swapping station, the battery enters and leaves the station directly through the transit channel, and when needing to perform battery swapping, the vehicle is parked in the specific region (battery swappable region). Since the width dimension of the battery inlet/outlet port corresponds to the width dimension of the transit channel, which dimension is generally the width dimension of one battery, the postures of the battery entering and leaving the station are restricted, that is, the postures of the battery entering the station (depleted battery entering the battery swapping station) and leaving the station (fully charged battery leaving the battery swapping station) are fixed, resulting in a small battery swapping region of the vehicle (a smaller parking region of the vehicle) and higher requirements for the driver's parking position and vehicle angle, which are unfriendly to the driver's operation, cause the driver to adjust the parking position of the vehicle many times, and then affect the battery swapping efficiency; and at the same time, due to different types of vehicles needing battery swapping, the swappable regions for vehicles of different types are also different, which also requires the driver to adjust the parking position of the vehicle, affecting battery swapping efficiency.

In view of this, in order to improve the battery swapping efficiency of the battery swapping station, the inventors, through in-depth researches, design a battery swapping station, including: a main body provided therein with a battery storage region and a transit channel, where both the battery storage region and the transit channel extend in a first direction, the battery storage region and the transit channel are arranged side by side in a second direction, the battery storage region includes an adjustment location and a plurality of storage locations, the plurality of storage locations are sequentially distributed in the first direction, and are used to store batteries, and the adjustment location is located at one side of the storage locations in the first direction, the transit channel is used for allowing transferring of the batteries on the storage locations, and the first direction and the second direction are perpendicular to each other, where the adjustment location and the transit channel together form a battery adjustment region, a battery inlet/outlet port is formed at a wall surface of the main body in the first direction, and the battery inlet/outlet port communicates with the battery adjustment region.

Compared with the solution that the battery enters and leaves the station directly through the transit channel and the vehicle needs to be parked within a specified region for battery swapping, the technical solution of the embodiment of the present application enables, through the battery adjustment region, the battery to be correspondingly adjusted in posture in this region according to the position where the vehicle outside the station is located, such that there is no need for the driver to adjust the parking position of the vehicle, reducing the operation difficulty of the driver and there is no need to adjust the parking positions for the vehicles of different types, further improving the battery swapping efficiency.

The battery swapping station disclosed in the embodiment of the present application can be used, but is not limited to, to replace the batteries of vehicles. It can also be used to replace the batteries of ships, aircrafts and other electric devices, such as electric toys, electric tools, electric power carts, electric vehicles, steamers, spacecrafts, etc. In the above, the electric toy may include a fixed or mobile electric toy, such as a game console, an electric car toy, an electric ship toy, or an electric aircraft toy. The electric tool may include a fixed or mobile electric tool, such as electric machine tool, electric sweeping vehicle, etc. The spacecraft may include an airplane, a rocket, a space shuttle, a spaceship, or the like.

The following is described by taking a vehicle as an electric device as example, to describe the battery swapping station.

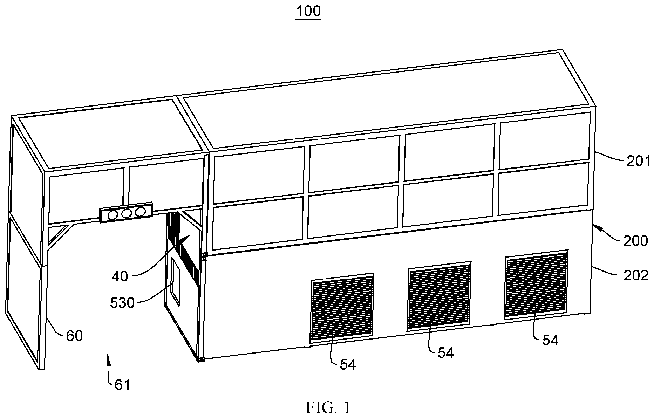

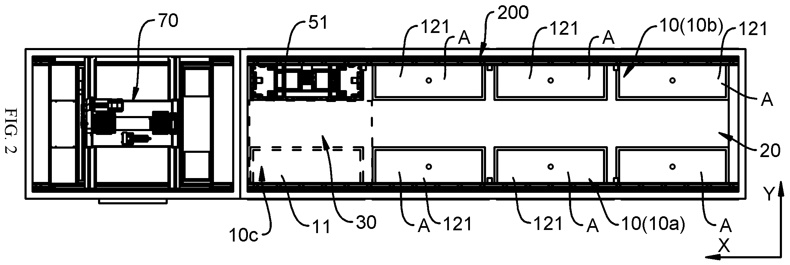

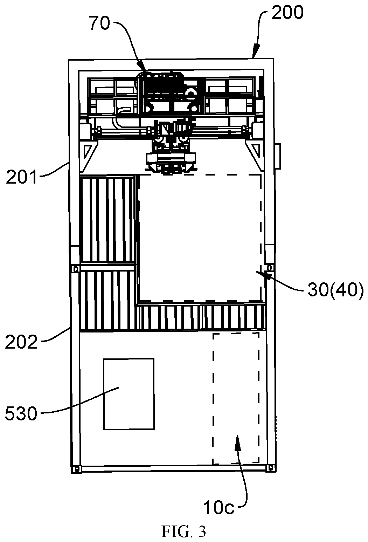

In some embodiments of the present application, referring to FIG. 1 to FIG. 3, FIG. 1 is a perspective view of a battery swapping station 100 in some embodiments of the present application, FIG. 2 is an internal schematic diagram of a battery swapping station 100 in some embodiments of the present application, and FIG. 3 is a side view of partial structure of a battery swapping station 100 in some embodiments of the present application. In FIG. 2, the battery located in the battery storage region 10 is shown with label A.

The battery swapping station 100 includes a main body 200. The main body 200 is provided therein with a battery storage region 10 and a transit channel 20. The battery storage region 10 and the transit channel 20 both extend in the first direction. The battery storage region 10 and the transit channel 20 are arranged side by side in the second direction. The battery storage region 10 includes an adjustment location 11 and a plurality of storage locations 121. The plurality of storage locations 121 are sequentially distributed in the first direction for storing batteries. The adjustment location 11 is located at one side of the plurality of storage locations 121 in the first direction. The transit channel 20 is used for transferring of the batteries on the storage locations 121, and the first direction and the second direction are perpendicular to each other. In the above, the adjustment location 11 and the transit channel 20 together form the battery adjustment region 30, and a battery inlet/outlet port 40 is formed on the wall surface of the main body in the first direction. The battery inlet/outlet port 40 communicates with the battery adjustment region 30.

In FIG. 2, the first direction is shown by an arrow and the label X, and the second direction is shown by an arrow and the label Y. In FIG. 2 and FIG. 3, the position of the battery adjustment region 30 is shown by dashed lines.

The battery storage region 10 is a region including an adjustment location 11 and a plurality of storage locations 121. The storage location 121 is a place for storing batteries, and the adjustment location 11 is a place where no batteries are placed. Generally, the width dimension of the battery storage region 10 corresponds to the width dimension of one battery. The transit channel 20 is a place for transferring of batteries. That is, the depleted battery is removed from the vehicle and then transferred to the storage location through the transit channel 20, and the fully charged battery is removed from the battery storage region 10 and transferred to the vehicle through the transit channel 20. Generally, the width dimension of the transit channel 20 corresponds to the width dimension of one battery to achieve battery transferring. Exemplarily, the fully charged battery is moved from the battery storage region 10 to the transit channel 20 in the second direction, and moved out of the battery inlet/outlet port 40 to the vehicle in the first direction. The battery adjustment region 30 is a place formed by the transit channel 20 and the adjustment location 11, the width dimension of which is larger than the width dimension of one battery, for example, the sum of the width dimensions of two batteries. The battery adjustment region 30 is a place where the postures of the battery entering and leaving the station can be adjusted. For example, before leaving the station, the posture of the fully charged battery can be adjusted in this region to correspond to the parking position of the vehicle outside the station (e.g., in the dashed line box in FIG. 3, the posture of the battery can be adjusted within the dashed lines). The battery inlet/outlet port 40 is a part that connects the inside of the main body 200 with the outside, and the width dimension of the battery inlet/outlet port 40 corresponds to the width dimension of the battery adjustment region 30, so that the fully charged battery whose posture is adjusted can be smoothly transferred to the vehicle through the battery inlet/outlet port 40.

Compared with the solution that the battery enters and leaves the station directly from the transit channel 20 and the electric device needs to be parked within a specified region for battery swapping, the technical solution of the embodiment of the present application enables, through the battery adjustment region 30, the battery to be correspondingly adjusted in posture in this region according to the position where the vehicle outside the station is located and leave the station in this posture through the battery inlet/outlet port 40, without need of the driver adjusting the parking position of the vehicle, enables larger battery swapping region (i.e., larger parking range) for the vehicle, reducing the operation difficulty of the driver and further improving the battery swapping efficiency.

In some embodiments of the present application, referring to FIG. 2, the battery storage region 10 includes a first battery storage region 10a and a second battery storage region 10b, the transit channel 20 is located between the first battery storage region 10a and the second battery storage region 10b, and the transit channel 20 and the adjustment location(s) 11 of the first battery storage region 10a and/or the second battery storage region 10b together form the battery adjustment region 30.

The first battery storage region 10a and the second battery storage region 10b are places located at two sides of the transit channel 20, respectively, and the two can both used for storing batteries.

That "the transit channel 20 and the adjustment location(s) 11 of the first battery storage region 10a and/or the second battery storage region 10b together form the battery adjustment region 30" refers to that the transit channel 20 and the adjustment location 11 of the first battery storage region 10a may form the battery adjustment region 30, in other words, the transit channel 20 and the adjustment location 11 of the first battery storage region 10a both run through the wall surface of the main body 200 to form the battery inlet/outlet port 40, where generally, in this case, the width dimension of the battery adjustment region 30 corresponds to the width dimension of two batteries; alternatively, it refers to that the transit channel 20 and the adjustment location 11 of the second battery storage region 10b may form the battery adjustment region 30, in other words, the transit channel 20 and the adjustment location 11 of the second battery storage region 10b both run through the wall surface of the main body 200 to form the battery inlet/outlet port 40, where generally, in this case, the width dimension of the battery adjustment region 30 corresponds to the width dimension of two batteries; alternatively, it refers to that the transit channel 20 and the adjustment locations 11 of the first battery storage region 10a and the second battery storage region 10b may form the battery adjustment region 30, in other words, the transit channel 20, the first battery storage region 10a and the second battery storage region 10b all run through the wall surface of the main body 200 to form the battery inlet/outlet port 40, where generally, in this case, the width dimension of the battery adjustment region 30 corresponds to the width dimension of three batteries.

According to the technical solution of the embodiment of the present application, the battery storage region 10 includes a first battery storage region 10a and a second battery storage region 10b, which are located at two sides of the transit channel 20. When the battery adjustment region 30 is formed by the transit channel 20 and the adjustment location 11 of the first battery storage region 10a, or by the transit channel 20 and the adjustment location 11 of the second battery storage region 10b, a large space can be provided for the battery to adjust its own posture. When the battery adjustment region 30 is formed by the transit channel 20, and the adjustment locations 11 of the first battery storage region 10a and the second battery storage region 10b, a larger space can be provided for the battery to adjust its own posture.

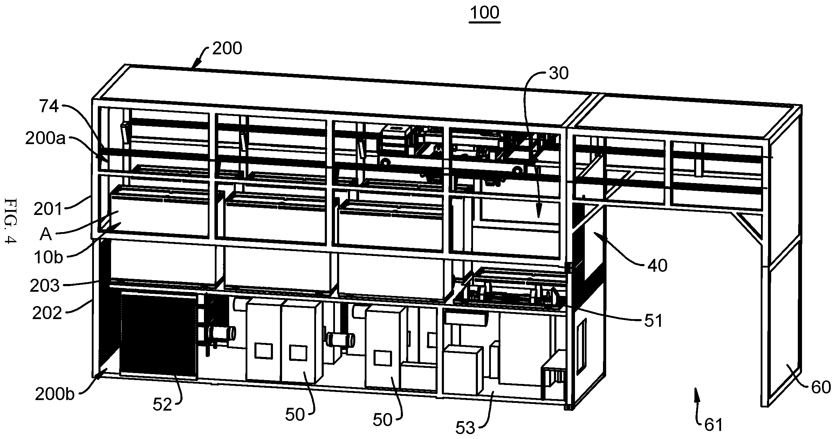

In some embodiments of the present application, referring to FIG. 4, FIG. 4 is a perspective view of the internal structure of a battery swapping station 100 in some embodiments of the present application. In FIG. 4, the battery is marked with label A. The internal space of the main body 200 includes an upper space 200a and a lower space 200b, and the first battery storage region 10a, the transit channel 20 and the second battery storage region 10b are provided in the upper space 200a.

The upper space 200a is a place located above the lower space 200b, and the first battery storage region 10a, the transit channel 20 and the second battery storage region 10b are provided in the upper space 200a. The lower space 200b is a place located below the upper space 200a.

The first battery storage region 10a, the transit channel 20 and the second battery storage region 10b are provided in the upper space 200a, and various functional equipment (such as a control room 53 or charging device 50, etc.) may be provided in the lower space 200b, so that the battery is separated from the functional equipment, to avoid the functional equipment interfering with the transferring of the battery.

In some embodiments of the present application, referring to FIG. 1 and FIG. 4, the main body 200 includes a first box body 201, a second box body 202 and a partition 203, the first box body 201 and the second box body 202 define an internal space of the main body 200, and the partition 203 is connected to the first box body 201 and/or the second box body 202, so as to divide the internal space into the upper space 200a and the lower space 200b.

The first box body 201 is a part provided above the second box body 202. The second box body 202 is a part provided below the first box body 201. The partition 203 is a part provided inside the first box body 201 and the second box body 202, to divide the inside of the first box body 201 and the second box body 202 into the upper space 200a and the lower space 200b.

In the technical solution of the embodiment of the present application, the main body 200 has simple structure and is convenient to manufacture and transport. The first box body 201 and the second box body 202 may be containers each having an opening, that is, the main body 200 is made of two containers, and the two containers have the openings opposite to each other and are stacked up and down to define the internal space of the main body 200. The main body 200 may be manufactured in advance, which facilitates the overall transportation to the destination and meets the needs of rapid landing and assembly. It does not require on-site construction, is not affected by weather, and reduces manpower intensity.

Optionally, the first box body 201 and the second box body 202 may be each of the container structure. Since the width of the first box body 201 and the width of the second box body 202 may each be the width of the conventional container structure, satisfying the road transport requirement and enabling the battery swapping station 100 to be transported on the road.

In some embodiments of the present application, as shown in FIG. 2 and FIG. 3, the main body 200 is further provided therein with a third battery storage region 10c, where the third battery storage region 10c is disposed in the lower space 200b and communicates with the battery adjustment region 30. In FIG. 2 and FIG. 3, the position of the third battery storage region 10c is shown by a dashed line box.

The third battery storage region 10c is a region for storing batteries, which is located in the lower space 200b and located below the battery adjustment region 30. Generally, no battery is placed in the battery adjustment region 30, so the battery stored in the third battery storage region 10c may be transferred through the battery adjustment region 30.

In the case that the size of the battery swapping station remains unchanged, the number of batteries stored therein is limited. Since there is the battery adjustment region 30, and batteries are not stored in the battery adjustment region 30, the number of batteries stored in the battery swapping station 100 will be reduced accordingly compared to the existing solution. To solve this problem, the third battery storage region 10c is provided below the battery adjustment region 30, to make up for the number of the stored batteries decreased due to the battery adjustment region 30, ensure the battery quantity of the battery swapping station 100, and thereby ensure the battery swapping efficiency of the battery swapping station 100.

In some embodiments of the present application, as shown in FIG. 4, the battery swapping station 100 further includes charging devices 50, and the charging devices 50 are each disposed in the lower space 200b and used to charge the battery.

The charging device 50 is a device capable of charging the batteries stored in the battery swapping station 100, and is located in the lower space 200b, to avoid interfering with the battery swapping operation. When the depleted battery of the vehicle is transferred into the battery swapping station 100, the charging device 50 may charge the depleted battery.

By providing the charging device 50, the depleted battery removed from the vehicle is charged, for ready for next battery swapping.

In some embodiments of the present application, as shown in FIG. 4, the battery swapping station 100 further includes battery bases 51 connected to the charging devices 50 for connecting the batteries to charge the batteries; and the storage location 121 includes a charging location and a temporarily storage location, the battery bases 51 are each provided in the corresponding charging location, and the temporarily storage location is used for transferring of the battery.

The charging location is a place where the battery base 51 is provided. The battery base 51 is a component connected to the battery and supporting the battery. The battery base 51 is connected to the charging device 50 and can charge the battery. The temporarily storage location is a place used to temporarily store the depleted battery. When the vehicle's depleted battery is removed, it can be temporarily stored in the temporarily storage location, and when the fully charged battery is installed in the vehicle, the depleted battery is transferred from the temporarily storage location to the charging base of the free charging location. Optionally, the third battery region may also be used as the temporarily storage location.

According to the technical solution of the embodiment of the present application, due to the limited charging load of the battery swapping station 100 and the maximum number of charged batteries, the depleted battery removed from the vehicle is first placed in the temporarily storage location, and after the fully charged battery in the charging location is transferred and installed on the electric device, the depleted battery is transferred to the battery base 51 in the charging location for charging.

In some embodiments of the present application, as shown in FIG. 4, the battery swapping station 100 further includes a cooling device 52, and the cooling device 52 is disposed in the lower space 200b and used to charge the battery.

The cooling device 52 is a device provided in the lower space 200b and used to cool the battery. The cooling device 52 may deliver a medium, such as gas and fluid, to the battery. In the above, in some embodiments, the cooling device 52 may be a water cooler in the station. Since the cooling device 52 is separately provided in the lower space 200b, refrigeration equipment with larger power may be designed for the battery swapping station 100, enabling better battery heat management effect and longer service life/shorter charging time of the battery.

By providing the cooling device 52 in the lower space 200b to cool the batteries in the battery swapping station 100, the safety of the batteries in the battery swapping station 100 is guaranteed, thereby ensuring the safety of the battery swapping station 100. At the same time, the cooling device 52 is provided in the lower space 200b, not interfering with the transferring of the batteries.

In some embodiments of the present application, as shown in FIG. 4, the main body 200 is further provided therein with a control room 53, where the control room 53 is disposed in the lower space 200b.

The control room 53 is a functional room for controlling the operation of the battery swapping station 100, and staff can control related work of the battery swapping station 100 in the control room 53. In FIG. 4, the control room 53 is adjacent to the third battery storage region 10c, effectively utilizing the lower space 200b of the battery swapping station 100. The control room 53 may be provided with an observation window 530 (as shown in FIG. 1).

By providing the control room 53 in the lower space 200b, the battery swapping operation of the battery swapping station 100 is controlled, ensuring the battery swapping efficiency of the battery swapping station 100.

In some embodiments of the present application, referring to FIG. 1, heat dissipation parts 54 are provided on the wall surface of the second box body 202, for dissipating heat in the lower space 200b.

The heat dissipation parts 54 are parts connecting the lower space 200b with the outside, can dissipate the heat inside the lower space 200b to the outside, ensures that the lower space 200b has appropriate temperature and ensures the safety of the devices in the lower space 200b. In some embodiments, the heat dissipation parts 54 may be air outlet louvers provided at the wall surface of the second box body 202.

By providing the heat dissipation parts 54 on the wall surface of the second box body 202, the heat in the lower space 200b can be effectively discharged, thereby ensuring the safety of the battery swapping station 100.

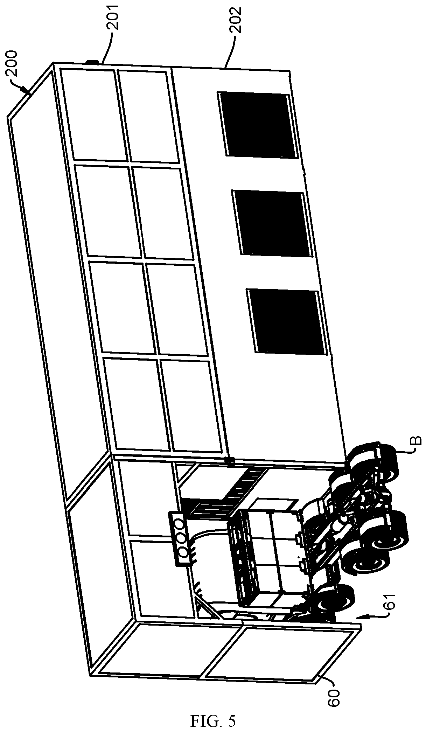

In some embodiments of the present application, referring to FIG. 1 and FIG. 5, FIG. 5 is a perspective view showing a vehicle and a battery swapping station 100 in some embodiments of the present application. In FIG. 5, the vehicle is marked with label B. The battery swapping station 100 further includes a side sealing part 60; the first box body 201 extends beyond the second box body 202 in the first direction; and the end, in the first direction, of the portion of the first box body 201 extending beyond the second box body 202 is connected with the side sealing part 60. The side sealing part 60, the first box body 201 and the second box body 202 together define a battery swapping channel 61, and the battery swapping channel 61 communicates with the battery inlet/outlet port 40.

The side sealing part 60 is a part for connecting the end of the first box body 201, which supports the suspended portion of the first box body 201 to make the main body 200 stably stressed. The battery swapping channel 61 is a region for parking of the vehicle, and the battery swapping channel 61 is a region communicating with the battery inlet/outlet port 40.

In some embodiments, the battery swapping channel 61 may be provided with traffic lights, to prompt the driver of the vehicle to operate the vehicle according to the traffic lights.

By providing the side sealing part 60 to support the suspended portion of the first box body 201 and form the battery swapping channel 61 for allowing parking of the vehicle, the vehicle may be parked in the battery swapping channel 61 and subjected to battery swapping.

In some embodiments of the present application, referring to FIG. 3, FIG. 4 and FIG. 6, FIG. 6 is a perspective view of a battery replacement device 70 in some embodiments of the present application. The battery swapping station 100 further includes a battery replacement device 70 provided in the main body 200 and used to transfer the battery.

The battery replacement device 70 is a device that can grab the battery and move the battery. The battery can be removed from the vehicle and stored in the battery swapping station 100 through the battery replacement device 70, and can be taken out from the battery swapping station 100 and installed in the vehicle.

According to the technical solution of the embodiment of the present application, the battery is transferred through the battery replacement device 70 to realize the battery swapping operation of the battery swapping station 100. The battery replacement device 70 can transfer the depleted battery of the vehicle through the battery inlet/outlet port 40 to the battery storage region in the main body 200, and can transfer the fully charged battery in the battery storage region 10 through the battery inlet/outlet port 40 to the vehicle to realize battery swapping.

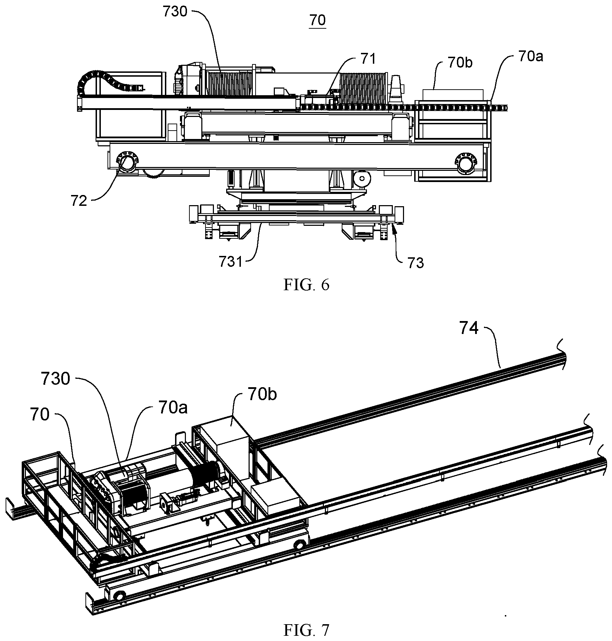

In some embodiments of the present application, referring to FIG. 6 and FIG. 7, FIG. 7 is a schematic view showing a first moving mechanism 71 and a second moving mechanism 72 in some embodiments of the present application. The battery replacement device 70 has a first moving mechanism 71, a second moving mechanism 72 and a hoisting mechanism 73, where the first moving mechanism 71 is used to drive the hoisting mechanism 73 to move in a first direction, and the second moving mechanism 72 is used to drive the hoisting mechanism 73 to move in the second direction, and the hoisting mechanism 73 is used to hoist the battery.

The main body 200 is provided thereinside with a track 74, and the track 74 extends in the first direction. The battery replacement device 70 may be installed on the track 74, and may move along the track 74. The first moving mechanism 71 is capable of outputting action of moving in the first direction to drive the hoisting mechanism 73 to move in the first direction. The first moving mechanism 71 may include a device capable of outputting linear motion, such as a chain travel driving mechanism. The second moving mechanism 72 is capable of outputting action of moving in the second direction to drive the hoisting mechanism 73 to move in the second direction. The second moving mechanism 72 may include a device capable of outputting linear motion, such as a linear pushing device or a pinion and rack driving assembly.

By providing the first moving mechanism 71 and the second moving mechanism 72, the hoisting mechanism 73 is enabled to move between the battery storage region 10 and the transit channel 20 and between the battery swapping station 100 and the electric device, to realize transferring and battery swapping of the battery; and through the first moving mechanism 71 and the second moving mechanism 72, the adjustment of the posture of the battery in the battery adjustment region 30 in the first direction and the second direction can be realized.

Optionally, in some embodiments, the first moving mechanism 71 and the second moving mechanism 72 may be of an overhead crane 70a structure, and the overhead crane 70a is installed on the track 74 and capable of outputting actions of moving in the first direction and the second direction, so that the hoisting mechanism 73 can move between the battery storage region 10 and the transit channel 20, and the posture of the battery can be adjusted in the battery adjustment region 30.

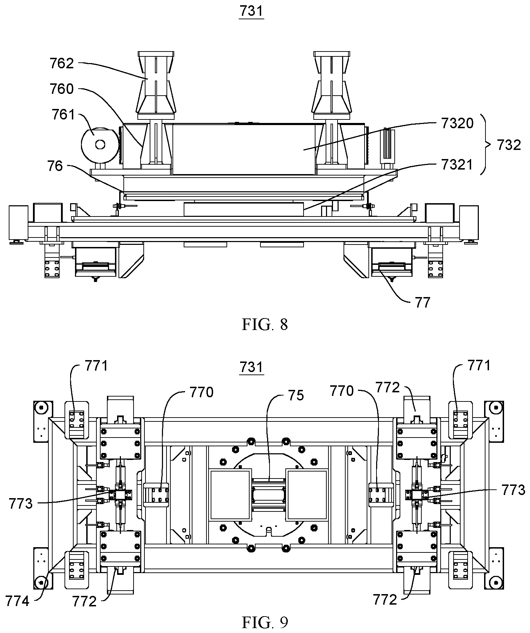

In some embodiments of the present application, referring to FIG. 6 and FIG. 8, FIG. 8 is a perspective view of a battery grabbing unit 731 in some embodiments of the present application. The hoisting mechanism 73 includes a spreader unit 730 and a battery grabbing unit 731. The spreader unit 730 is used to drive the battery grabbing unit 731 to move in a third direction. The battery grabbing unit 731 is used to grab the battery, and the third direction, the first direction and the second direction are perpendicular to each other.

The spreader unit 730 is a device capable of outputting movement in the third direction, and can realize the lifting and lowering of the battery grabbing unit 731. Optionally, the spreader unit 730 may include a winch.

In the technical solution of the embodiment of the present application, the battery grabbing unit 731 realizes lifting and lowering by the spreader unit 730, and then realizes hoisting of the battery, so as to ensure the battery swapping efficiency of the battery swapping station 100.

In some embodiments of the present application, as shown in FIG. 8, the hoisting mechanism 73 further includes a rotation mechanism 732, for driving the battery grabbing unit 731 to rotate around the third direction.

The rotation mechanism 732 is a device for driving the battery grabbing unit 731 to rotate around the third direction, to adjust the angle of the battery. In some embodiments, the rotation mechanism 732 includes a control box 7320 and a slewing bearing 7321. The control box 7320 is installed on the spreader fixing device 76 (the battery grabbing unit 731 may include a spreader fixing device 76 and a battery locking mechanism 77, the spreader fixing device 76 is connected to the spreader unit 730 to realize the lifting and lowering of the battery locking mechanism 77, and the battery locking mechanism 77 is used to grab the battery), the slewing bearing 7321 is provided on the battery locking mechanism 77, and a motor for driving the slewing bearing 7321 to rotate is installed inside the control box 7320 to drive the battery locking mechanism 77 to rotate around the third direction.

By providing the rotation mechanism 732, the angle of the battery around the third direction can be adjusted to adapt to the angle of the vehicle relative to the battery swapping station 100, thereby achieving a larger swappable region (i.e. larger parking range) and reducing the driver's parking accuracy requirements, and further improving the battery swapping efficiency.

In some embodiments of the present application, as shown in FIG. 9, FIG. 9 is a bottom view of a battery grabbing unit 731 in some embodiments of the present application. The battery swapping station 100 further includes an identification unit 75 used for identifying the position information of the battery.

The identification unit 75 is a device for identifying the position information of the battery, to position the battery and feed back the position information thereof. In some embodiments, the identification unit 75 may be a visual positioning camera, which can locate the vehicle's depleted battery and feed back the position information of the depleted battery to the battery replacement device 70, and the battery replacement device 70 adjusts the position of the battery locking mechanism 77 based on the position information, to move through the battery inlet/outlet port 40 to above the depleted battery and grab the battery. The battery locking mechanism 77 grabs the fully charged battery in the battery swapping station 100, adjust the posture of the battery according to the position information, and move to the vehicle through the battery inlet/outlet port 40. In some embodiments, the identification unit 75 may be provided at the lower surface of the battery locking mechanism 77, and in order to improve the identification effect, the lower surface of the battery locking mechanism 77 may be provided with an illumination lamp.

By providing the identification unit 75, the position information of the depleted battery on the vehicle may be identified, and is fed back to the battery replacement device 70, to adjust the posture of the battery, so as to achieve the larger swappable region (i.e. larger parking range), reduce the driver's parking accuracy requirements, and further improve the battery swapping efficiency.

In some embodiments of the present application, a battery swapping station 100 is provided. The battery swapping station 100 is a battery swapping station for heavy trucks and is used to replace back-mounted batteries of electric trucks. Reference is made to FIG. 1 to FIG. 9. The battery swapping station 100 includes a main body 200, charging devices 50, battery bases 51, a cooling device 52, a side sealing part 60 and a battery replacement device 70.

The main body 200 includes a first box body 201, a second box body 202 and a partition 203, the first box body 201 is provided above the second box body 202 and the two communicate with each other internally; and the partition 203 extends in the first direction, and is provided inside the first box body 201 and the second box body 202, so as to divide the inside of the first box body 201 and the second box body 202 into the upper space 200a and the lower space 200b. The second box body 202 is provided with the partition 203 at about two-thirds of the height, and the first box body 201 is equipped with a track 74 at about two-thirds of the height, so that the battery replacement device 70 can walk on the track 74 to transport the battery. The first box body 201 extends beyond the second box body 202 in the first direction. The end, in the first direction, of the portion of the first box body 201 extending beyond the second box body 202 is connected with the side sealing part 60. The side sealing part 60, the first box body 201 and the second box body 202 together define the battery swapping channel 61.

The charging devices 50 and the cooling device 52 are provided in the lower space 200b, and the wall surface of the second box body 202 is provided with air outlet louvers to discharge the heat generated by the charging devices 50 and the cooling device 52. A control room 53 is also provided in the lower space 200b to control working of the charging devices 50, the cooling device 52 and the battery replacement device 70. A third battery storage region 10c is provided on one side of the control room 53, and the third battery storage region 10c is used to store batteries.

The first battery storage region 10a, the second battery storage region 10b and the transit channel 20 are provided in the upper space 200a. The first battery storage region 10a and the second battery storage region 10b are provided at two sides of the transit channel 20 in the second direction. One side of the first battery storage region 10a is provided with an adjustment location 11, the battery is not stored in the adjustment location 11, the adjustment location and the transit channel 20 together form the battery adjustment region 30, which is used for adjusting of the posture of the battery and located above the control room 53 and the third battery storage region 10c. The battery adjustment region 30 occupies approximately two-thirds of the width of the internal space of the battery swapping station 100 (for example, approximately the width of two batteries) and approximately the length of one battery. The battery replacement device 70 may adjust, in this region, the posture of the battery leaving the station. The battery adjustment region 30 runs through the wall surface of the main body 200 to form the battery inlet/outlet port 40. The battery inlet/outlet port 40 corresponds to the width of the battery adjustment region 30 and occupies approximately the width of two batteries. The battery swapping channel 61 also has a corresponding battery swappable region where the width of the swappable region is consistent with the width of the battery inlet/outlet port 40 and the battery adjustment region 30, accounting for about the width of two batteries. The driver only needs to park the vehicle's battery within this range to perform battery swapping. The battery inlet/outlet port 40 may be provided with a rolling shutter door or a sliding door to seal the battery swapping station 100 to prevent dust and theft.

The battery replacement device 70 includes an overhead crane 70a, a hoisting mechanism 73 and an identification unit 75. The overhead crane 70a may walk in the first direction along the track 74, and the overhead crane can drive the hoisting mechanism 73 to move in the second direction (the overhead crane 70a is provided with an overhead crane control module 70b used to control the work of overhead crane 70a). The identification unit 75 is used for identifying the position information of the battery. The hoisting mechanism 73 includes a spreader unit 730, a rotation mechanism 732 and a battery grabbing unit 731. The battery grabbing unit 731 is used to grab the battery, the spreader unit 730 may drive the battery grabbing unit 731 to move up and down to realize the lifting and lowering of the battery, and the rotation mechanism 732 is used to drive the battery grabbing unit 731 to rotate, to adjust the posture of the battery. The battery grabbing unit 731 may include a spreader fixing device 76 and a battery locking mechanism 77, positioning pins 760 and a steel cable movable pulley 761 are installed on the spreader fixing device 76, and the steel cable on the winch cooperates with the steel cable movable pulley 761, to realize the lifting and lowering of the battery grabbing unit 731. The positioning pins 760 matches the positioning pin sleeves 762 on the overhead crane 70a to limit the battery grabbing unit 731 in the first direction and the second direction. Before the overhead crane 70a travels, a winding machine lifts the battery grabbing unit 731 until the positioning pins 760 are inserted into the positioning pin sleeves 762 to prevent the battery grabbing unit 731 from swinging. Referring to FIG. 9, the battery locking mechanism 77 is equipped with a first direction guide block 770, a second direction guide block 771, a lock tongue 772, a lock tongue drive cylinder 773, and an in-position sensor 774. The battery locking mechanism 77 positions the battery in the first direction and the second direction through the first direction guide block 770 and the second direction guide block 771. The in-position sensor 774 is used to sense whether it is in contact with the battery to confirm whether the battery locking mechanism 77 is in position, where if the battery locking mechanism 77 is in position, the lock tongue 772 is driven by the lock tongue driving cylinder 773 to extend out to fix the battery (hook the upper frame of the battery).

When the battery swapping station 100 is working, a vehicle travels into the battery swapping channel 61, so that the vehicle's battery falls in the battery swappable region, the battery replacement device 70 starts to work, and the overhead crane 70a carries the hoisting mechanism 73 to walk to above the battery swapping channel 61. The identification unit 75 takes photos and positions the battery of the vehicle, and calculates the positional deviation between the hoisting mechanism 73 and the battery (the positional deviation in the first direction and the second direction) and the angle deviation (due to that the vehicle cannot be parked to be parallel to the channel when the vehicle enters the station for battery swapping), and the overhead crane 70a moves to correct the position of the hoisting mechanism 73 in the first direction and the second direction according to the calculated values of the position deviation and the angle deviation, and the rotation mechanism 732 makes the battery grabbing unit 731 rotate around the third direction, so that the battery grabbing unit 731 has the same angle as the battery and finally stays directly above the battery, with the angle matched (the increased rotation function can effectively reduce bumping and swinging during battery installation and disassembly, the battery swapping process is smoother and quieter, the device accuracy is higher, and the driver does not need to repeatedly reverse/forward to adjust the posture due to the parking angle of the vehicle). When the identification unit 75 performs positioning again and confirms that the position is within the allowable error range, the spreader unit 730 lowers the battery grabbing unit 731. When the battery grabbing unit 731 is about to contact the battery, the first direction guide block 770 and the second direction guide block 771 cooperates with each other to correct the position of the battery grabbing unit 731 to achieve precise positioning of the battery grabbing unit 731 and the battery. When the battery grabbing unit 731 contacts the upper frame of the battery, the in-position sensor 774 is triggered to confirm that the battery grabbing unit 731 is in position. At this time, the spreader lock tongue 772 extends out under the pushing of the lock tongue drive cylinder 773 and hooks the upper frame of the battery. The spreader unit 730 pulls up the battery grabbing unit 731 and the battery until the positioning pins 760 are inserted into the positioning pin sleeves 762, the rotation mechanism 732 works to make the battery grabbing unit 731 rotate to the original position, the overhead crane 70a starts to walk, to move the battery to the battery adjustment region 30, and performs position adjustment, and the overhead crane 70a then transfers the battery to the battery storage region 10 and puts the depleted battery down, and then transfer the fully discharged battery in the battery storage region 10 according to the above operations to install it on the vehicle.

The above are only preferred embodiments of the present application and are not intended to limit the present application. For those skilled in the art, the present application may have various modifications and variations. Any modifications, equivalent replacements, improvements, etc. made within the spirit and principles of the present application shall be included in the protection scope of the present application.

## Claims

1. A battery swapping station, comprising:
a main body, wherein the main body is provided therein with a battery storage region and a transit channel, the battery storage region and the transit channel both extend in a first direction, and the battery storage region and the transit channel are arranged side by side in a second direction;
the battery storage region comprises an adjustment location and a plurality of storage locations, the plurality of storage locations are sequentially distributed in the first direction and configured for storing batteries, the adjustment location is located at one side of the plurality of storage locations in the first direction, the transit channel is configured for transferring of the batteries on the storage locations, and the first direction and the second direction are perpendicular to each other;
the adjustment location and the transit channel together form a battery adjustment region; and
a wall surface of the main body in the first direction is provided with a battery inlet/outlet port, and the battery inlet/outlet port communicates with the battery adjustment region.

2. The battery swapping station according to claim 1, wherein
the battery storage region comprises a first battery storage region and a second battery storage region, the transit channel is located between the first battery storage region and the second battery storage region, and the transit channel and an adjustment location of the first battery storage region and/or an adjustment location of the second battery storage region together form the battery adjustment region.

3. The battery swapping station according to claim 2, wherein
an internal space of the main body comprises an upper space and a lower space, and the first battery storage region, the transit channel and the second battery storage region are provided in the upper space.

4. The battery swapping station according to claim 3, wherein
the main body comprises a first box body, a second box body and a partition, the first box body and the second box body define the internal space of the main body, and the partition is connected to the first box body and/or the second box body, to divide the internal space into the upper space and the lower space.

5. The battery swapping station according to claim 3 or 4, wherein
the main body is further provided therein with a third battery storage region, and the third battery storage region is provided in the lower space and communicates with the battery adjustment region.

6. The battery swapping station according to any one of claims 3 to 5, wherein
the battery swapping station further includes charging devices, and the charging devices are provided in the lower space and configured for charging the batteries.

7. The battery swapping station according to claim 6, wherein
the battery swapping station further comprises battery bases connected to the charging devices and configured for connecting the batteries to charge the batteries; and
the storage locations each comprise a charging location and a temporarily storage location, the battery bases are each provided in the corresponding charging location, and the temporarily storage location is used for transferring of the battery.

8. The battery swapping station according to any one of claims 3 to 7, wherein
the battery swapping station further comprises a cooling device, and the cooling device is provided in the lower space and configured for cooling the batteries.

9. The battery swapping station according to any one of claims 3 to 8, wherein
the main body is further provided therein with a control room, and the control room is provided in the lower space.

10. The battery swapping station according to any one of claims 4 to 9, wherein
a wall surface of the second box bod is provided with heat dissipation parts configured for dissipating heat in the lower space.

11. The battery swapping station according to any one of claims 4 to 10, wherein the battery swapping station further comprises a side sealing part;
the first box body extends beyond the second box body in the first direction; and
an end, in the first direction, of a portion of the first box body extending beyond the second box body is connected with the side sealing part, the side sealing part, the first box body and the second box body together define a battery swapping channel, and the battery swapping channel communicates with the battery inlet/outlet port.

12. The battery swapping station according to any one of claims 1 to 11, wherein the battery swapping station further comprises a battery replacement device provided in the main body and configured for transferring the battery.

13. The battery swapping station according to claim 12, wherein
the battery replacement device has a first moving mechanism, a second moving mechanism and a hoisting mechanism;
the first moving mechanism is configured for driving the hoisting mechanism to move in the first direction, and the second moving mechanism is configured for driving the hoisting mechanism to move in the second direction; and
the hoisting mechanism is configured for hoisting the battery.

14. The battery swapping station according to claim 13, wherein
the hoisting mechanism comprises a spreader unit and a battery grabbing unit, the spreader unit is configured for driving the battery grabbing unit to move in a third direction, the battery grabbing unit is configured for grabbing the battery, and the third direction, the first direction and the second direction are perpendicular to each other.

15. The battery swapping station according to claim 14, wherein
the hoisting mechanism further comprises a rotation mechanism configured for driving the battery grabbing unit to rotate around the third direction.

16. The battery swapping station according to claim 15, wherein
the battery swapping station further comprises an identification unit configured for identifying position information of the batteries.
